# EUROPEAN PATENT APPLICATION

(11) **EP 3 805 619 A1**
(43) Date of publication of application: **14.04.2021**
(21) Application number: 19811571.9
(22) Date of filing: 30.05.2019
(51) Int. Cl.: F16K 7/06

(54) **PINCH VALVE**

(30) Priority: 31.05.2018 JP 2018105150; 31.05.2018 JP 2018105180
(71) Applicant: Asahi Yukizai Corporation, Nobeoka-shi, Miyazaki 882-8688 (JP)
(72) Inventor: SATO, Yukinobu, Nobeoka-shi, Miyazaki 882-8688 (JP); MASUDA, Kensuke, Nobeoka-shi, Miyazaki 882-8688 (JP)
(74) Representative: Patentanwälte Ruff, Wilhelm, Beier, Dauster & Partner mbB
(86) International application number: PCT/JP2019/021631
(87) International publication number: WO 2019/230918

(57) **Abstract**

A pinch valve free of outflow of fluid at the inside of a tubing to the outside of the pinch valve even if the tubing ruptures. The pinch valve 1 comprises a valve part 2, a tubing 3 inside of which a flow path is formed and accommodated in the valve part 2, a pressing part 4 pressing the tubing 3 or releasing the pressing to cause the tubing 3 to deform and open and close the flow path, and a drive part 5 driving the pressing part 4, the pinch valve further comprising a seal part sealing a fluid connection between a space near an outside surface of the tubing 3 and an outside of the pinch valve 1.

## Description

### FIELD

The present invention relates to a pinch valve.

### BACKGROUND

Known in the art is a pinch valve having a valve part, a tubing inside of which a flow path is formed and accommodated in the valve part, a pressing part pressing the tubing or releasing the pressing to cause the tubing to deform and open and close the flow path, and a drive part driving the pressing part (for example, see PTL 1).

The pinch valve described in PTL 1, as shown in FIG. 1 and FIG. 2, makes a wedge shaped pressing part (53) (drive part) slide along an axial direction of the tubing so that the pinching means (19) (pressing part) presses against the tubing or releases the pressing. Due to such a structure, the pinch valve described in PTL 1 can be reduced in size.

### [CITATIONS LIST]

### [PATENT LITERATURE]

[PTL 1] European Patent Application Publication No. 2306055

### SUMMARY

### [TECHNICAL PROBLEM]

In general, tubing formed by rubber or another elastic material may rupture due to deterioration or fine surface damage, resulting in the fluid inside flowing out to the outside of the tubing. The drive part of the pinch valve described in PTL 1 is an air actuator using air pressure to drive the pressing part, but the fluid flowing out to the outside of the tubing may further flow out to the outside of the pinch valve through an exhaust port or intake port, etc. In particular, in the case where the fluid is a chemical-like sulfuric acid having a detrimental effect on the human body, it is necessary to prevent the fluid from flowing out to the outside of the pinch valve.

The structure of the pinch valve described in PTL 1 is effective for tubing which is relatively small in wall thickness and for smaller caliber tubing, for example, tubing of a caliber smaller than 25 mm. However, larger caliber tubing is relatively large in wall thickness and becomes large in the pressing force and stroke of the pressing part required for closing the flow path of the tubing, so the structure of the pinch valve described in PTL 1 cannot be applied as it is. For example, by making the contact area by which the pressing part abuts against the tubing smaller, the pressure applied to the tubing can be made higher and the pressing force required for closing the flow path of the tubing can be made lower. However, the pressing force concentrates at part of the tubing. When this occurs repeatedly, the durability of the tubing deteriorates.

The present invention has as its object to provide at least one of a pinch valve free of outflow of fluid at the inside of a tubing to the outside of the pinch valve, even if the tubing ruptures and a pinch valve able to lower the pressing force required for closing the flow path of the tubing without impairing the durability of the tubing.

### [SOLUTION TO PROBLEM]

According to one aspect of the present invention, there is provided a pinch valve comprising a valve part, a tubing inside of which a flow path is formed and accommodated in the valve part, a pressing part pressing the tubing or releasing the pressing to cause the tubing to deform and open and close the flow path, and a drive part driving the pressing part, the pinch valve further comprising a seal part sealing a fluid connection between a space near an outside surface of the tubing and an outside of the pinch valve.

According to another aspect of the present invention, there is provided a pinch valve comprising a valve part, a tubing inside of which a flow path is formed and accommodated in the valve part, a pressing part pressing the tubing or releasing the pressing to cause the tubing to deform and open and close the flow path, and a drive part driving the pressing part, in which pinch valve a curvature of a front end part of the pressing part abutting against the tubing being 1.1 to 4.2 times the wall thickness of the tubing.

The seal part may have a first seal member, the valve part may have an abutting surface abutting against an end face of the tubing, and the first seal member may be provided between the end face of the tubing and the abutting surface. The seal part may have a second seal member and the second seal member may be provided between the valve part and the drive part. The seal part may have a third seal member, the valve part may have a body member and a holding member holding the tubing and accommodated in the body member, and the third seal member may be provided between the body member and the holding member. The valve part may have a body member holding the tubing, connecting members arranged at the two ends of the body member, and cap nuts screwed over the two ends of the body member together with the connecting members. The seal part may have a fourth seal member, the drive part may have a piston and a base plate, and the fourth seal member may be provided between the piston and the base plate. The seal member may be an O-ring. The first seal member may be an annular projection formed at the abutting surface. The material of the valve part may be a plastic.

The pressing part may have a curved part and two straight parts connected to the ends of the curved part in a vertical cross-section in an axial direction of the tubing and the angle formed by the two straight parts may be 55 to 90 degrees. At the opposite side from the pressing part from the axis of the tubing, a bottom supporting surface supporting the tubing may be provided and the bottom supporting surface may be provided with a support projection causing part of the tubing to project out to the pressing part side. The height of the support projection may be 7% to 40% of the wall thickness of the tubing. At the side of the pressing part from the axis of the tubing, a top support surface supporting the tubing except at the part corresponding to the pressing part may be provided and a distance between a center of the front end part of the pressing part and an edge of the top support surface may be 3 to 6 times the wall thickness of the tubing in a vertical cross-section in an axial direction of the tubing.

### [ADVANTAGEOUS EFFECTS OF INVENTION]

According to the above aspects of the present invention, the common effect is exhibited that at least one of a pinch valve free of outflow of fluid at the inside of a tubing to the outside of the pinch valve even if the tubing ruptures and a pinch valve able to lower the pressing force required for closing the flow path of the tubing without impairing the durability of the tubing is provided.

### BRIEF DESCRIPTION OF DRAWINGS

FIG. 1 is a vertical cross-sectional view of a pinch valve according to a first embodiment of the present invention.
FIG. 2 is a disassembled perspective view of the pinch valve.
FIG. 3 is a disassembled perspective view of a holding member.
FIG. 4 is a partial enlarged vertical cross-sectional view of FIG. 1.
FIG. 5 is a vertical cross-sectional view showing a modification of tubing.
FIG. 6 is an enlarged vertical cross-sectional view of part of a pressing part.
FIG. 7 is another enlarged vertical cross-sectional view of part of a pressing part.
FIG. 8 is a view showing a relationship between curvature and a full closing pressing force.
FIG. 9 is a view showing a relationship between curvature and strain.
FIG. 10 is a view showing a relationship between a taper angle and a full closing pressing force.
FIG. 11 is a view showing a relationship between a taper angle and strain.
FIG. 12 is a view showing a relationship between a height of a support projection and a full closing pressing force.
FIG. 13 is a vertical cross-sectional view of a pinch valve according to a second embodiment of the present invention.
FIG. 14 is a disassembled perspective view of the pinch valve.
FIG. 15 is a partial enlarged vertical cross-sectional view of FIG. 13.

### DESCRIPTION OF EMBODIMENTS

Below, embodiments of the present invention will be explained in detail while referring to the drawings. Throughout the drawings, corresponding constituent elements will be assigned common reference notations.

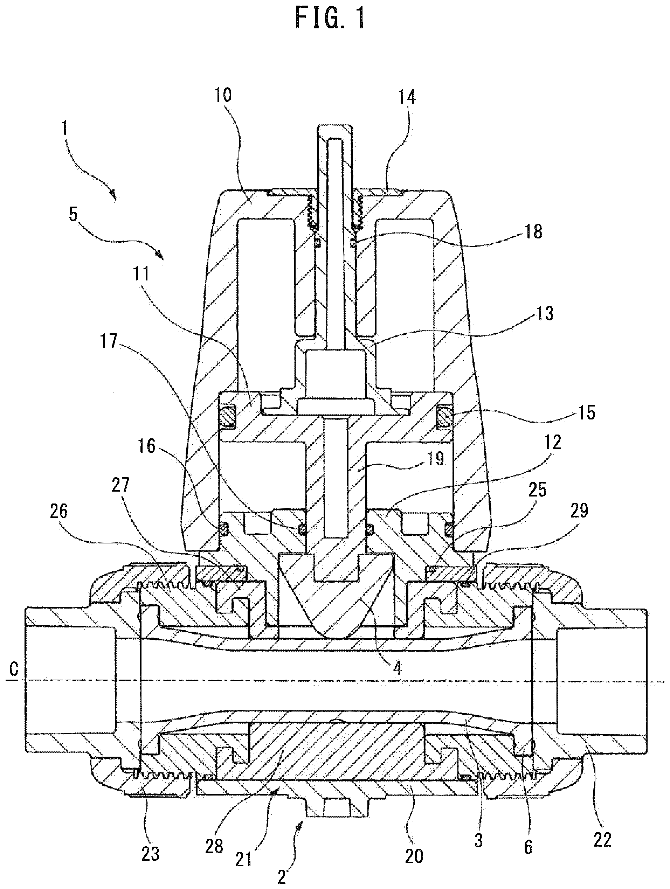

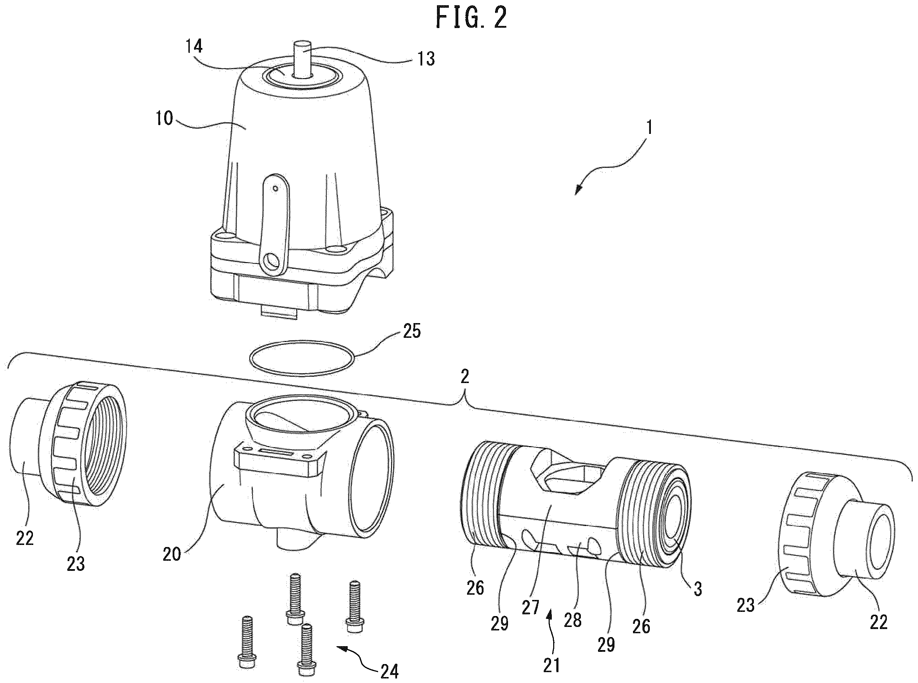

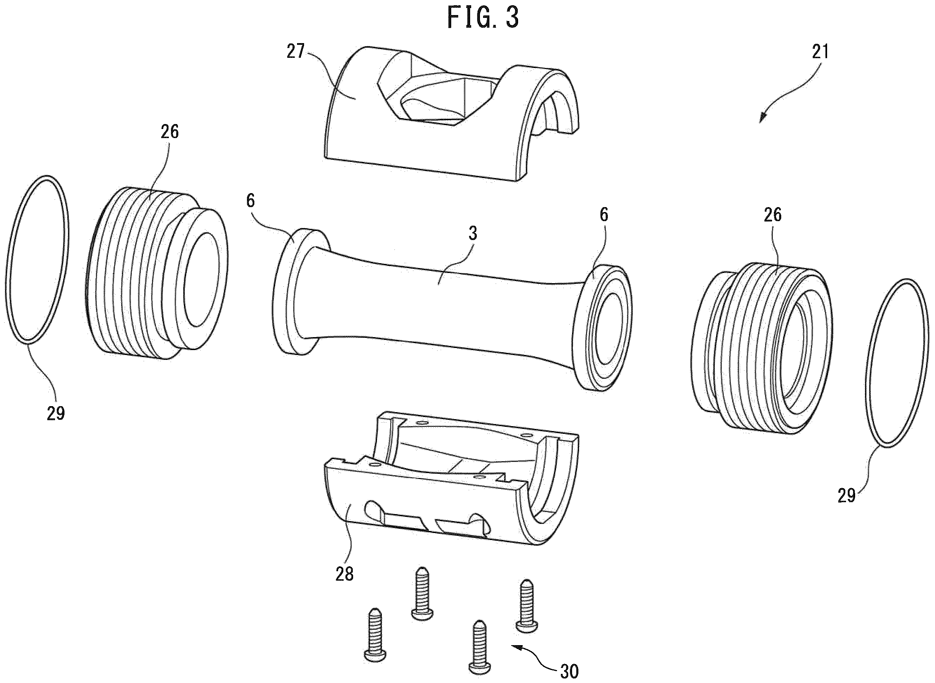

FIG. 1 is a vertical cross-sectional view of a pinch valve 1 according to a first embodiment of the present invention, while FIG. 2 is a disassembled perspective view of the pinch valve 1 and FIG. 3 is a disassembled perspective view of a holding member 21. The pinch valve 1 has a valve part 2, a tubing 3 inside of which a flow path is formed and accommodated in the valve part 2, a pressing part 4 pressing the tubing 3 or releasing the pressing to cause the tubing 3 to deform and open and close the flow path, and a drive part 5 driving the pressing part 4. The tubing 3 is formed from an elastic material.

The drive part 5 has a cylinder 10, a piston 11 able to slide inside the cylinder 10, a base plate 12 arranged facing the piston 11, an indicator 13, a cap 14, an O-ring 15, an O-ring 16, an O-ring 17, and an O-ring 18. The drive part 5 is an air actuator and can supply compressed air from a not shown air port inside the cylinder 10 or discharge it from the cylinder 10 to thereby make the piston 11 ascend and descend inside the cylinder 10. The piston 11 has a shaft part 19 running through the base plate 12. Therefore, the piston 11 ascends and descends while being guided by the base plate 12. The front end of the shaft part 19 has the pressing part 4 attached to it. Along with the ascent and descent of the piston 11, the indicator 13 placed on the piston 11 emerges from and recedes into the cylinder 10. Therefore, by visually checking the state of emergence or receding of the indicator 13, it is possible to obtain a grasp of the position of the piston 11 and in turn the position of the pressing part 4, that is, the opened or closed state of the pinch valve 1.

The O-ring 15 is attached to the outer circumferential surface of the piston 11 and seals the interval between the outer circumferential surface of the piston 11 and the inner circumferential surface of the cylinder 10. The O-ring 16 is attached to the outer circumferential surface of the base plate 12 and seals the interval between the outer circumferential surface of the base plate 12 and the inner circumferential surface of the cylinder 10. The O-ring 17 is attached to the inner circumferential surface of the through hole of the base plate 12 and seals the interval between the inner circumferential surface of the through hole of the base plate 12 and the outer circumferential surface of the shaft part 19 of the piston 11. The O-ring 18 is attached to the outer circumferential surface of the indicator 13 and seals the interval between the outer circumferential surface of the indicator 13 and the inner circumferential surface of the cylinder 10. Note that the drive part 5 may be an electric actuator or may be one making the piston 11 ascend and descend manually.

The valve part 2 has a cylindrical body member 20, a holding member 21 holding the tubing 3 and accommodated in the body member 20, connecting members 22 arranged at the two ends of the body member 20, and cap nuts 23 screwed over the two ends of the body member 20 together with the connecting members 22. The drive part 5 is attached by screws 24 to the valve part 2, specifically the body member 20. At this time, the O-ring 25 is arranged between the valve part 2 and the drive part 5, specifically the base plate 12.

The holding member 21 has annular members 26 holding flange parts 6 formed at the two ends of the tubing 3 and a top support member 27 and bottom support member 28 connecting the respective annular members 26. The outer circumferential surfaces of the annular members 26 are formed with male threads which are screwed with female threads formed at the inner circumferential surfaces of the cap nuts 23. At the respective annular members 26, in the state arranged at the tubing 3, O-rings 29 are arranged at the insides from the male threads. Therefore, O-rings 29 are arranged between the body member 20 and the holding member 21. The top support member 27 and bottom support member 28 are combined so as to surround the intermediate part of the tubing 3 and are coupled by the screws 30.

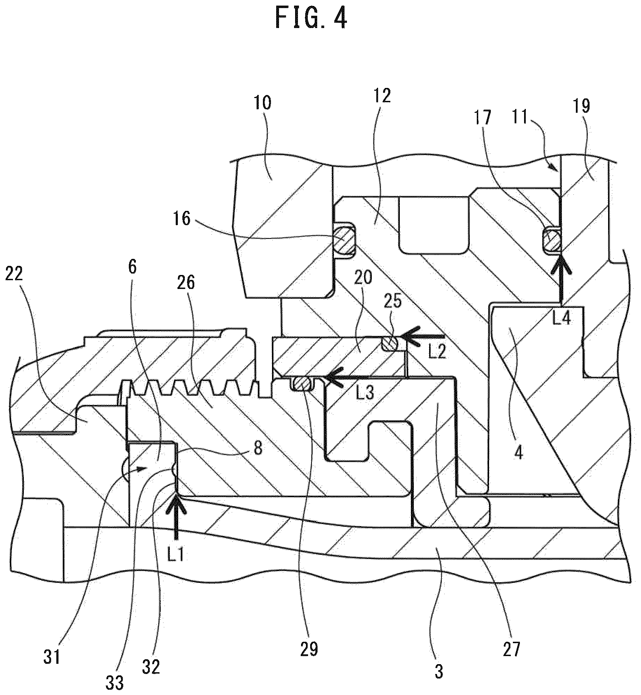

FIG. 4 is a partial enlarged vertical cross-sectional view of FIG. 1. At an end face of an annular member 26, an annular recessed part 31 is formed for receiving the flange part 6 of the tubing 3. At the surface corresponding to the bottom surface of the recessed part 31, an annular abutting surface 32 abutting against the annular end face 8 at the inside of the flange part 6 of the tubing 3 is formed. At the abutting surface 32, an annular projection 33 is formed. The top support member 27 and bottom support member 28 connect with the annular member 26 in the state with the tubing 3 being made to stretch very slightly in the axial direction. Therefore, the respective flange parts 6 of the tubing 3 are pressed against the corresponding abutting surface 32 of the annular member 26 and the annular projection 33 of the annular member 26 is buried in the end face 8 of the flange part 6 of the tubing 3. As a result, the annular projection 33 seals the interval between the end face 8 of the flange part 6 and the abutting surface 32 of the annular member 26.

In this regard, in general, tubing formed by rubber or another elastic material may rupture due to deterioration or fine scratches at the surface resulting in the fluid at the inside leaking to the outside of the tubing. In particular, in the case where the fluid is sulfuric acid or another chemical having a detrimental effect on the human body, it is necessary to prevent the fluid from flowing out to the outside of the pinch valve. Further, in the case of a fluid such as sulfuric acid which reacts with a metal, metal parts cannot be used in the pinch valve. Therefore, nonmetallic parts, for example, plastic parts, have to be used, but plastic parts tend to be poorer in dimensional accuracy compared with metal parts. Therefore, the possibility of outflow of fluid from between parts is higher compared with metal parts.

The pinch valve 1 according to the first embodiment has, in addition to a primary seal for securing tight closure at the time of ordinary use, a secondary seal type seal part provided for the case of the tubing 3 rupturing. Due to this, even if the tubing 3 ruptures, the fluid at the inside of the tubing 3 will not flow out to the outside of the pinch valve 1. Specifically, the pinch valve 1 has a seal part comprised of a first seal member of an annular projection 33, a second seal member of an O-ring 25, a third seal member of an O-ring 29, and a fourth seal member of an O-ring 17. These seal the fluid connection between the space near the outer surface of the tubing 3 and the outside of the pinch valve 1. Note that the annular projection 33 may also be replaced with an O-ring.

In relation to this, referring to FIG. 4, the annular projection 33 is used to seal the interval between the end face 8 of the flange part 6 and the abutting surface 32 of the annular member 26 and prevent outflow in the L1 direction. Further, the O-ring 25 is used to seal the interval between the valve part 2 and the drive part 5 and prevent outflow in the L2 direction. Further, the O-ring 29 is used to seal the interval between the body member 20 and the holding member 21 and prevent outflow in the L3 direction. Further, the O-ring 17 is used to seal the interval between the piston 11 and the base plate 12 and prevent outflow in the L4 direction. Furthermore, since the O-rings etc. are used, the work of replacing consumable parts can be easily performed.

As explained above, the pinch valve 1 according to the first embodiment uses an air actuator. Due to the presence of the fourth seal member of the O-ring 17, flow of the fluid flowing out to the outside of the tubing to the inside of the cylinder 10 is prevented, damage of the drive part is prevented, and outflow to the outside of the pinch valve 1 through the exhaust port or intake port etc. is prevented. Further, even in the case of the pinch valve 1 making the piston 11 ascend and descend manually instead of by an air actuator, due to the presence of the fourth seal member, the fluid flowing to the outside of the tubing is prevented from further flowing out to the outside of the pinch valve 1.

The seal part is not limited to the above-mentioned seal member. It can be freely arranged at a location where fluid communication between the space near the outer surface of the tubing 3 and the outside of the pinch valve 1 has to be sealed. Further, the specific configuration of the seal member is not limited to an O-ring. The member can be configured in any way so long as securing tight closure.

In the first embodiment, the drive part 5 was attached to the holding member 21 holding the tubing 3 through the body member 20, but it may also be directly attached to the holding member 21 without going through the body member 20. In this case, the O-ring 29 is omitted. It is possible to similarly eliminate or combine members to eliminate the seal member.

The pinch valve 1, in particular the valve part 2, can be made by a plastic material overall. For example, the cylinder 10, piston 11, base plate 12, and bottom support member 28 are formed by glass-fiber reinforced polypropylene (PPG), the pressing part 4 and top support member 27 are formed by recycled polyvinylidene fluoride (recycled PVDF), the body member 20, connecting members 22, cap nuts 23, and annular members 26 are formed by polyvinyl chloride (U-PVC), the indicator 13 is formed by acrylonitrile butadiene styrene (ABS), the cap 14 is formed by polypropylene (PP), and the tubing 3 is formed by ethylene propylene diene rubber (EPDM) or a fluororubber (FKM).

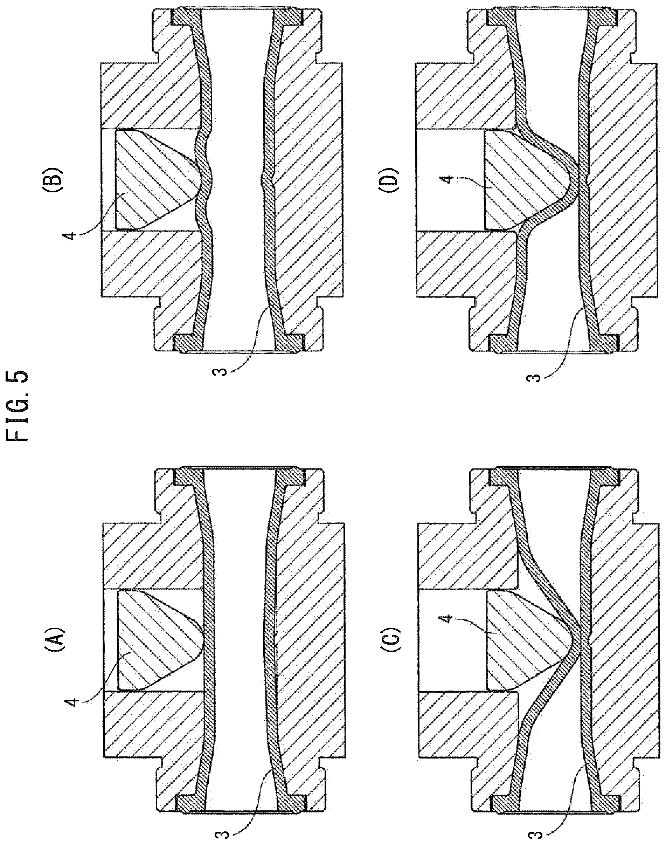

FIG. 5 is a vertical cross-sectional view showing a modification of the tubing 3. In FIG. 5, (A) shows the full opened state of the pinch valve 1 at the time of no pressure where fluid does not flow through the flow path, (B) shows the full opened state of the pinch valve 1 at the time of pressure where fluid flows through the flow path, (C) shows the full closed state of the pinch valve 1 at the time of no pressure where fluid does not flow through the flow path, and (D) shows the full closed state of the pinch valve 1 at the time of pressure where fluid flows through the flow path. Note that, FIG. 5 is schematically drawn. Therefore, the base plate 12, annular member 26, top support member 27, and bottom support member 28 are shown integrally as a single support member.

As clear from a comparison of (A) and (B) of FIG. 5, in the full opened state at the time of pressure, the tubing 3 expands at the portion not restricted by the pressing part 4 and a support member, specifically the top support member 27. Further, as clear from a comparison of (C) and (D) of FIG. 5, in the full closed state at the time of pressure, the tubing 3 expands so as to more closely adhere to the outside surface of the pressing part 4.

In general, by making the contact area of the pressing part abutting against the tubing smaller, it is possible to raise the pressure applied to the tubing and possible to lower the pressing force required for closing the flow path of the tubing. However, the pressing force concentrates at part of the tubing and this is repeatedly applied, resulting in deterioration of the durability of the tubing. Below, the optimum shapes of the pressing part 4 and support members will be explained.

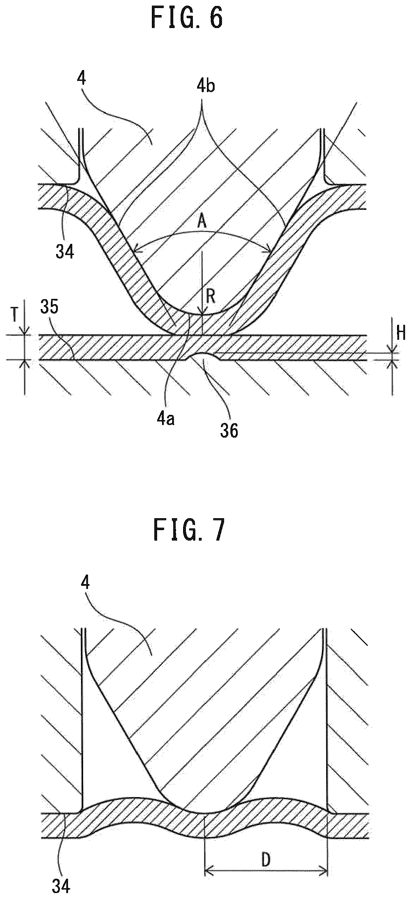

FIG. 6 is an enlarged vertical cross-sectional view of a part of the pressing part 4. FIG. 6 is a view corresponding to (D) of FIG. 5. The curvature of the front end part of the pressing part 4 abutting against the tubing 3 is defined as the "curvature R". The center of curvature of the curvature R is placed on the axis of symmetry in the cross-section of the pressing part 4. The pressing part4, in the vertical cross-section in the axial direction of the tubing 3, has the curved part 4a and two straight parts 4b connected to the ends of the curved part 4a. The angle formed by the two straight parts 4b is defined as the "taper angle A". Therefore, the straight parts 4b are tangents at the ends of the curved part 4a. The straight parts 4b do not need to be perfectly straight, and may also be curved lines close enough to be able to be viewed as straight lines.

At the side of the pressing part 4 from the axis C of the tubing 3 (FIG. 1), that is, at the top support member 27, a top supporting surface 34 supporting the tubing 3 at other than the part corresponding to the pressing part 4 is provided. At the opposite side from the pressing part 4 from the axis C of the tubing 3, that is, at the bottom support member 28, a bottom supporting surface 35 supporting the tubing 3 is provided. At the bottom supporting surface 35, a support projection 36 causing part of the tubing 3 to project out to the pressing part 4 side is formed. The support projection 36 is positioned facing the front end part of the pressing part 4 and is formed along the traverse direction of the tubing 3. The amount of projection of the bottom supporting surface 35, that is, the height of the support projection 36, is defined as the "height H".

FIG. 7 is another enlarged vertical cross-sectional view of a part of the pressing part 4. FIG. 7 is a view corresponding to (C) of FIG. 5. In the vertical cross-section in the axial direction of the tubing 3, the distance between the center of the front end part of the pressing part 4 and the edge of the top supporting surface 34 is defined as the "distance D".

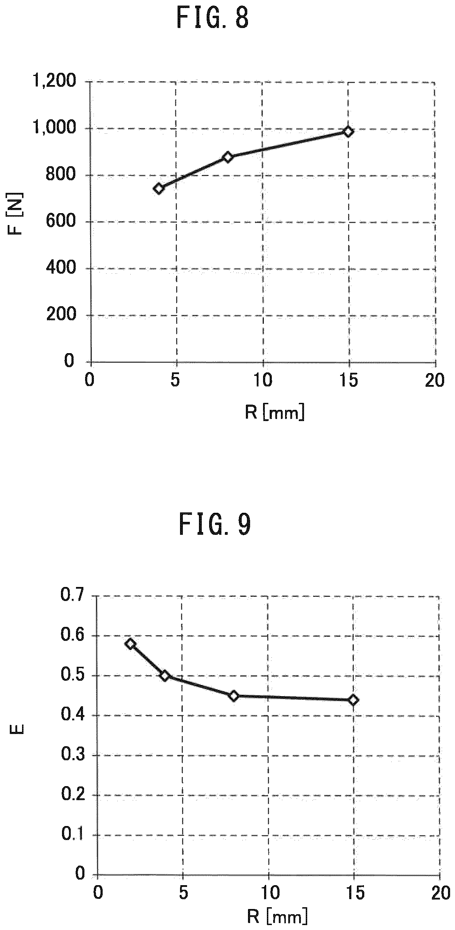

FIG. 8 is a view showing a relationship between curvature R and a full closing pressing force F, while FIG. 9 is a view showing a relationship between curvature F and strain E. The "full closing pressing force" means the pressing force required for the pressing part 4 driven by the drive part 5 to cause the tubing 3 to deform and render the pinch valve 1 the full closed state. The "strain" means the strain at a part where the tubing 3 is most deformed in the full closed state, for example, the strain at the part of the tubing 3 which the front end part of the pressing part 4 abuts against. The strain E is a value obtained by dividing the amount of change of length before and after deformation by the length before deformation.

As shown in FIG. 8, if the curvature R becomes smaller, the full closing pressing force F also becomes smaller. On the other hand, as shown in FIG. 9, if the curvature R becomes smaller, the curvature of the tubing 3 at the time of deformation of the tubing 3 also becomes smaller modeled on the curvature R of the pressing part 4. As a result, the strain E becomes larger and the durability of the tubing 3 ends up falling.

If considering these, the curvature R is preferably 1.1 to 4.2 times the wall thickness T of the tubing 3 (FIG. 6). For example, with a caliber 25 mm tubing 3, if the allowable strain of the rubber of the tubing 3 is 0.5, to render the pinch valve 1 within the required dimensions, the full closing pressing force F has to be made smaller than 1,000N. As a result, the curvature R becomes 4 to 15 mm.

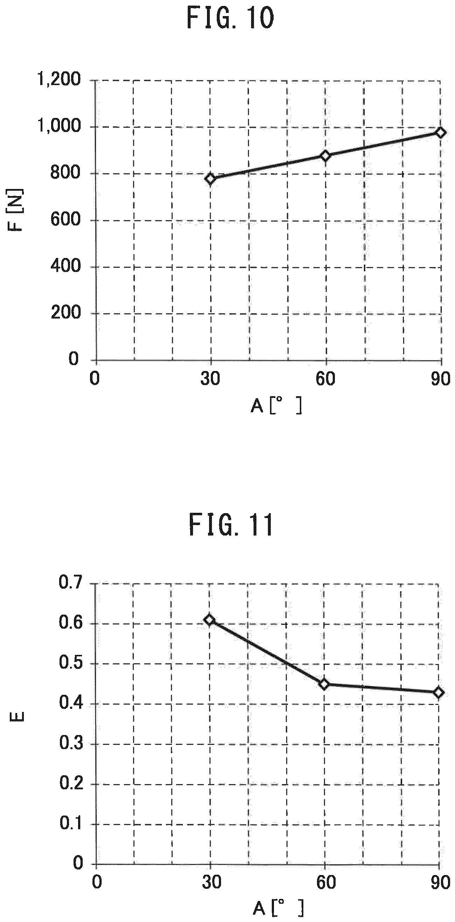

FIG. 10 is a view showing the relationship between the taper angle A and the full closing pressing force F, while FIG. 11 is a view showing the relationship between the taper angle A and the strain E. As shown in FIG. 10, if the taper angle A becomes smaller, the full closing pressing force F also becomes smaller. On the other hand, as shown in FIG. 11, if the taper angle A becomes smaller, the strain E becomes larger. That is, if the taper angle A is small, the contact area with the tubing 3 becomes smaller. As a result, the force applied per unit area of the tubing 3, that is, the pressure, becomes larger. Therefore, the strain E also becomes larger and the durability of the tubing 3 ends up falling.

If considering these, the taper angle A is preferably 55 to 90 degrees. For example, with caliber 25 mm tubing 3, if the allowable strain of the rubber of the tubing 3 is 0.5, to render the pinch valve 1 within the required dimensions, the full closing pressing force F has to be made smaller than 1,000N. As a result, the taper angle A becomes 55 to 90 degrees.

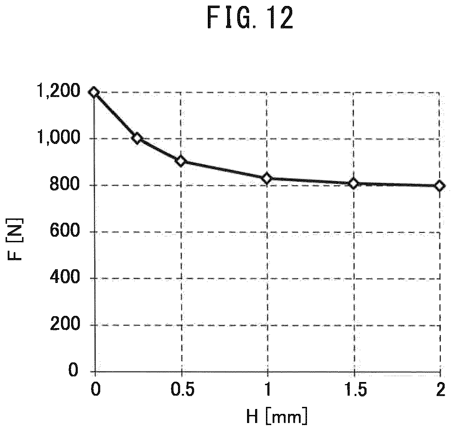

FIG. 12 is a view showing the relationship between the height H of the support projection 36 and the full closing pressing force F. If the height H of the support projection 36 becomes greater, the full closing pressing force F becomes smaller, but if the height H exceeds a predetermined value, the full closing pressing force F becomes substantially constant. If considering these, the case where the height H is larger than 7% of the wall thickness T of the tubing 3 and smaller than 40% of the wall thickness T is preferable. For example, with a caliber 25 mm tubing 3, to render the pinch valve 1 within the required dimensions, the full closing pressing force F has to be made smaller than 1,000N. As a result, the height H becomes larger than 0.25 mm and 1.5 mm.

Furthermore, while not shown, the distance D shown in FIG. 7 is preferably 3 to 6 times the wall thickness T of the tubing 3. The smaller the expansion of the tubing 3 at the time of pressing, the smaller the strain E, that is, the load on the tubing 3. The smaller the distance D, the smaller the expansion of the tubing 3 and the smaller the strain E as well. However, if the caliber of the tubing 3 is large, the stroke of the pressing part 4 accompanying the ascent and descent of the piston 11 becomes larger, so as a result, the necessary distance D ends up becoming larger. Even if the distance D is large, to keep the strain E at the prescribed value, the wall thickness T has to be increased. If increasing the wall thickness T, the full closing pressing force F becomes larger, so the drive part 5 has to be made larger in size. Accordingly, considering the balance of these, the distance D is preferably 3 to 6 times the wall thickness T of the tubing 3.

If considering these, the distance D is preferably in the above range. The 25 mm caliber tubing 3 has a wall thickness T of 3.5 mm. As a design example, the distance D is 17.5 mm. In this case, the distance D is 5 times the wall thickness T. Further, the 40 mm caliber tubing 3 has a wall thickness T of 6 mm. As a design example, the distance D is 25.0 mm. In this case, the distance D is 4.2 times the wall thickness T.

Due to the above, by optimizing the shapes of the pressing part 4 and support members, it is possible to lower the pressing force required for closing the flow path of the tubing without detracting from the durability of the tubing. Note that the optimum values of the curvature R, taper angle A, and height H and distance D of the support projection 36 may be combined in any way in the design.

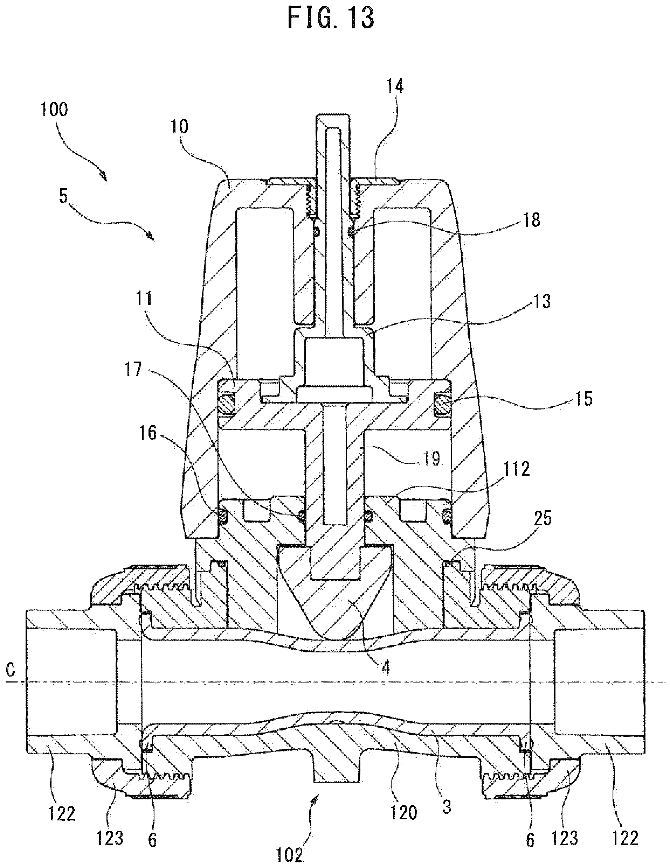

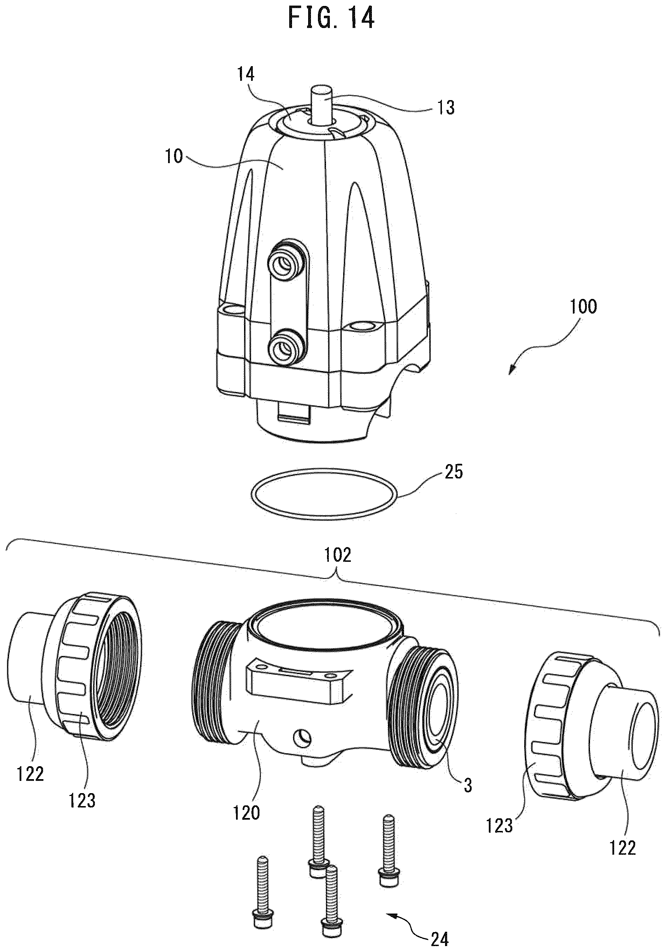

FIG. 13 is a vertical cross-sectional view of a pinch valve 100 according to a second embodiment of the present invention, while FIG. 14 is a disassembled perspective view of the pinch valve 100. The pinch valve 100 according to the second embodiment differs from the pinch valve 1 according to the first embodiment only in the configuration of the valve part, but the effect exhibited is the same. Therefore, only the different points will be explained below. Note that the shape of the base plate also differs, but the shape of the base plate differs corresponding to the shape of the valve part.

The valve part 2 of the pinch valve 1 according to the first embodiment, as explained above, has a cylindrical body member 20, a holding member 21 holding the tubing 3 and accommodated in the body member 20, connecting members 22 arranged at the two ends of the body member 20, and cap nuts 23 screwed with the two ends of the body member 20 together with the connecting members 22.

On the other hand, the valve part 102 of the pinch valve 100 according to the second embodiment has a cylindrical body member 120, connecting members 122 arranged at the two ends of the body member 120, and cap nuts 123 screwed over the two ends of the body member 120 together with the connecting member 122. That is, the valve part 102 of the second embodiment does not have a configuration corresponding to the holding member 21 in the valve part 2 of the first embodiment. The body member 120 directly holds the tubing 3. In other words, the body member 120 of the second embodiment is shaped as the body member 20 and holding member 21 of the first embodiment formed together. Therefore, the pinch valve 100 of the second embodiment does not have the O-ring 29 arranged between the body member 20 and the holding member 21 in the first embodiment. Note that, needless to say, not the body member 120, but the holding member can be shaped as the body member 20 and holding member 21 of the first embodiment formed together.

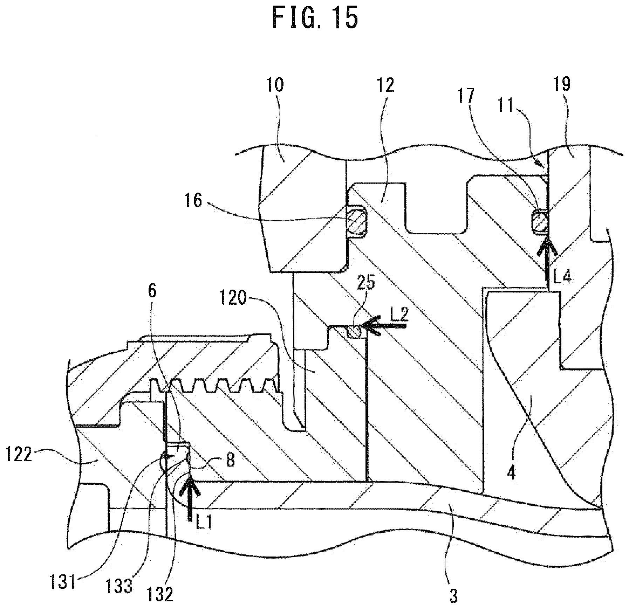

FIG. 15 is a partial enlarged vertical cross-sectional view of FIG. 13. At the end face of the body member 120, an annular recessed part 131 is formed for receiving a flange part 6 of the tubing 3. At the surface corresponding to the bottom surface of the recessed part 131, an annular abutting surface 132 abutting against the annular end face 8 at the inside of the flange part 6 of the tubing 3 is formed. At the abutting surface 132, an annular projection 133 is formed. The body member 120 holds the tubing 3 in the state with the tubing 3 being made to stretch very slightly in the axial direction. Therefore, the respective flange parts 6 of the tubing 3 are pressed against the corresponding abutting surfaces 132 of the body member 120 and the annular projections 133 are buried in the end faces 8 of the flange parts 6 of the tubing 3. As a result, the annular projections 133 seal the intervals between the end faces 8 of the flange parts 6 and the abutting surfaces 132 of the body member 120.

The pinch valve 100 according to the second embodiment has, in addition to the first seal for securing tight closure at the time of ordinary use, a second seal of the seal part provided for when the tubing 3 ruptures. Due to this, even if the tubing 3 ruptures, the fluid inside of the tubing 3 will never flow out to the outside of the pinch valve 1. Specifically, the pinch valve 1 has a seal part comprised of the first seal member of the annular projection 133, the second seal member of the O-ring 25, and the fourth seal member of the O-ring 17. These seal the fluid connection between the space near the outer surface of the tubing 3 and the outside of the pinch valve 1. Note that, as explained above, the pinch valve 100 according to the second embodiment does not have a configuration corresponding to the third seal member of the O-ring 29 of the first embodiment. The annular projection 133 may be used in place of an O-ring.

In relation to this, if referring to FIG. 15, the annular projection 133 is used to seal the interval between the end face 8 of the flange part 6 and the abutting surface 132 of the body member 120 and prevent outflow in the L1 direction. Further, the O-ring 25 is used to seal the interval between the valve part 2 and drive part 5 and prevent outflow in the L2 direction. Further, the O-ring 17 is used to seal the interval between the piston 11 and the base plate 112 and prevent outflow in the L4 direction.

The pinch valve 1 according to the first embodiment has more parts compared with the pinch valve 100 according to the second embodiment, but can be easily assembled. Furthermore, at the time of maintenance, it is sufficient to replace only the tubing or O-rings or other consumable parts, so this is excellent in maintenance cost. On the other hand, the pinch valve 100 according to the second embodiment is configured with the body member 20 and holding member 21 formed integrally as compared with the pinch valve 1 according to the first embodiment and has no O-ring 29, so the number of parts is smaller and manufacture is possible by a lower cost. Furthermore, by replacing the body member with the tubing and O-rings assembled as a single piece, maintenance can be easily performed.

### REFERENCE SIGNS LIST

1 pinch valve
2 valve part
3 tubing
4 pressing part
5 drive part
10 cylinder
11 piston
12 base plate
13 indicator
14 cap
20 body member
21 holding member
22 connecting member
23 the cap nut
25 O-ring
26 annular member
27 top support member
28 bottom support member
29 O-ring
31 recessed part
32 abutting surface
33 annular projection
34 top supporting surface
35 bottom supporting surface
36 support projection
A taper angle
D distance
H height
R curvature
T wall thickness

## Claims

1. A pinch valve comprising
a valve part,
a tubing inside of which a flow path is formed and accommodated in the valve part,
a pressing part pressing the tubing or releasing the pressing to cause the tubing to deform and open and close the flow path, and
a drive part driving the pressing part,
the pinch valve further comprising a seal part sealing a fluid connection between a space near an outside surface of the tubing and an outside of the pinch valve.

2. The pinch valve according to claim 1, wherein the seal part has a first seal member, the valve part has an abutting surface abutting against an end face of the tubing, and the first seal member is provided between the end face of the tubing and the abutting surface.

3. The pinch valve according to claim 1 or 2, wherein the seal part has a second seal member and the second seal member is provided between the valve part and the drive part.

4. The pinch valve according to any one of claims 1 to 3, wherein the seal part has a third seal member, the valve part has a body member and a holding member holding the tubing and accommodated in the body member, and the third seal member is provided between the body member and the holding member.

5. The pinch valve according to any one of claims 1 to 3, wherein the valve part has a body member holding the tubing, connecting members arranged at the two ends of the body member, and cap nuts screwed over the two ends of the body member together with the connecting members.

6. The pinch valve according to any one of claims 1 to 5, wherein the seal part has a fourth seal member, the drive part has a piston and a base plate, and the fourth seal member is provided between the piston and the base plate.

7. The pinch valve according to any one of claims 2 to 6, wherein the seal member is an O-ring.

8. The pinch valve according to claim 2, wherein the first seal member is an annular projection formed at the abutting surface.

9. The pinch valve according to any one of claims 1 to 8, wherein the material of the valve part is a plastic.

10. The pinch valve according to any one of claims 1 to 9, wherein a curvature of a front end part of the pressing part abutting against the tubing is 1.1 to 4.2 times a wall thickness of the tubing.

11. The pinch valve according to claim 10, wherein the pressing part has a curved part and two straight parts connected to the ends of the curved part in a vertical cross-section in an axial direction of the tubing and the angle formed by the two straight parts is 55 to 90 degrees.

12. The pinch valve according to claim 10 or 11, wherein at the opposite side from the pressing part from the axis of the tubing, a bottom supporting surface supporting the tubing is provided and the bottom supporting surface is provided with a support projection causing part of the tubing to project out to the pressing part side.

13. The pinch valve according to claim 12, wherein the height of the support projection is 7% to 40% of the wall thickness of the tubing.

14. The pinch valve according to any one of claims 10 to 13, wherein at the side of the pressing part from the axis of the tubing, a top support surface supporting the tubing except at the part corresponding to the pressing part is provided and a distance between a center of the front end part of the pressing part and an edge of the top support surface is 3 to 6 times the wall thickness of the tubing in a vertical cross-section in an axial direction of the tubing.
